(19) Europäisches Patentamt
European Patent Office
Office européen des brevets

(11) EP 4 546 236 A1

(12) EUROPEAN PATENT APPLICATION

(43) Date of publication:
30.04.2025 Bulletin 2025/18

(21) Application number: 24194722.5

(22) Date of filing: 15.08.2024

(51) International Patent Classification (IPC):
G06Q 10/1053 $^{(2023.01)}$   G06F 16/901 $^{(2019.01)}$
G06N 5/022 $^{(2023.01)}$

(52) Cooperative Patent Classification (CPC):
G06Q 10/1053; G06F 16/9024; G06N 5/022

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.10.2023 US 202318493442

(71) Applicant: BOLD Limited
Hamilton, Bermuda HM09 (BM)

(72) Inventors:
• JIN, Kai
Hamilton (BM)
• MAURYA, Ankur
Hamilton (BM)

(74) Representative: Abel & Imray LLP
Westpoint Building
James Street West
Bath BA1 2DA (GB)

(54) DYNAMIC TAGGING

(57) Certain aspects of the disclosure provide systems and methods for extracting and exploiting keyword and job title relations. Systems and methods provide for generating a knowledge graph embedding keywords, job titles, and additional resume data. Further, systems and methods provide for utilizing the knowledge graph to identify and link additional job titles with the embedded keywords.

FIG. 1

EP 4 546 236 A1

## Description

## BACKGROUND

*Field*

Aspects of the present disclosure relate to identifying and exploiting relationships between titles and content.

*Description of Related Art*

Resumes are used to convey information about a job seeker, including their work history and experience. Often, the job seeker includes one or more job titles and resume summaries in their resume, which may include information regarding their past job responsibilities, tasks, work experience, work history, education, achievements, skills, and the like for their prior work experiences. A job title may convey additional information about the job seeker's experience, for example, by giving context to a resume summary. A job title often indicates a level of a position held, such as seniority, and gives an indication of a job function.

However, when considering the universe of job seekers and their respective resume summaries, there is no consistent mapping of job titles to actual experience; that is, there are many jobs with similar titles, but dissimilar responsibilities. Similarly, there are many responsibilities common to different jobs. Consequently, the relationships between job titles and job responsibilities are complex and non-deterministic, which creates technical problems when trying to automatically parse such information for other functions.

Thus, there is a need for improved understanding and mapping between different job titles.

## SUMMARY

Certain aspects provide a computer-implemented method, comprising: extracting a keyword from a content phrase from a resume; identifying an existing job title linked to the content phrase; identifying an additional job title from a knowledge graph based on the keyword; and in response to determining an association between the additional job title and the existing job title, linking the content phrase with the additional job title.

Other aspects provide processing systems configured to perform the aforementioned methods as well as those described herein; (non-transitory) computer-readable media comprising instructions that, when executed by a processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

## DESCRIPTION OF THE DRAWINGS

The appended figures depict certain aspects and are therefore not to be considered limiting of the scope of this disclosure.

FIG. 1 depicts an example dynamic tagging system for identifying and exploiting relationships between job titles and job experience content.

FIG. 2 depicts an example process flow for generating a content-job title knowledge graph.

FIG. 3 depicts an example content-job title knowledge graph.

FIG. 4 depicts an example processing flow for generating new content relationships for job titles.

FIG. 5 depicts an exemplary user interface for interacting with job titles and content.

FIG. 6 depicts an example method for generating new content relationships for job titles.

FIG. 7 depicts an example method for generating a content-job title knowledge graph generating the knowledge graph.

**FIG. 8** schematically depicts an example processing system according to one or more embodiments shown and described herein.

To facilitate understanding, identical reference numerals have been used, where possible, to designate identical elements that are common to the drawings. It is contemplated that elements and features of one embodiment may be beneficially incorporated in other embodiments without further recitation.

## DETAILED DESCRIPTION

Aspects of the present disclosure provide apparatuses, methods, processing systems, and computer-readable mediums for identifying and exploiting relationships between titles and content.

As described herein, a job title conveys certain information about a particular job experience, including, for example, position, responsibilities, skills and seniority. For example, a "C-Suite" job title, such as Chief Executive Officer or Chief Financial Officer, conveys information about a job's seniority and responsibilities as top leadership positions. Other job titles may convey information about particular skills for a job, for example, an Artificial Intelligence Engineer or a Welder. However, other titles may be applicable for many industries and positions, such as a Manager, Director, or Strategist. Further, there is not standardization between industries, companies, and even within companies.

More descriptive and specific job tiles may convey the most relevant information about a job. These so-called "long-tail" job titles may identify a niche and industry of a particular job, however, many of the responsibilities and skills of the job may be more generally applicable to many different job titles. Some example long-tail job titles include full stack engineer, B2B sales specialist, online ESL instructor, software developer, and the like. Sometimes two different long-tail job titles can be accurately associated with the same job, but are not readily identifiable as such.

Alternatively, generalized job titles, referred to as "head" job titles, may serve as an initial indicator of information about a job, but many different jobs in different industries and with different responsibilities may be grouped together under one head job title, erroneously. Some example head job titles include researcher, operations manager, technical specialist, and the like.

Furthermore, a resume summary may list, for example, different responsibilities, skills, and tasks undertaken while working a particular job experience. Many of these responsibilities, skills, and tasks may be associated with many different jobs. For example, "computer proficiency," "increased revenue," and "established and maintained customer relationships" may be associated with many different job titles.

As described herein, the relationships between job titles and job responsibilities are complex and non-deterministic, which creates technical problems when trying to automatically parse such information. Thus, to identify relationships between different job titles and different resume summaries, many different resources, such as resume content, job title, previous and/or subsequent job title, resume summaries, education, industry, and the like, may be needed to provide complete context. Even a manual reviewer may miss or skip different associated job titles and resume summaries because the similarities and differences may not be apparent because of the complex and non-deterministic nature.

Thus, there is a need in the art for improved systems and methods for identifying, capturing, and discovering relationships between job titles and resume summaries in an efficient, scalable, and accurate manner, which allows for building artificially intelligent downstream systems that consume such information. Aspects of the present disclosure provide technical solutions to at least these technical problems by providing systems and methods for identifying and exploiting relationships between titles and content, such as job titles and resume summaries, through a standardized and structured approach to ensure associations are accurate and precise while also balancing the non-deterministic nature of job titles. This is achieved, at least in part, through the application of a graphical representation of the search space and similarity measurements to guide the search.

Aspects described herein provide systems and methods for identifying and exploiting relationships of different job titles and resume summaries in an automated, efficient, standardized, and accurate manner. Aspects of the present disclosure provide for generation of a knowledge graph to extract, embed, and capture these relationships. For example, a knowledge graph described herein may include relationships between job titles, occupations, industries, and resume summary keywords. Beneficially, the knowledge graph contextualizes job titles, both generalized head job titles, and niche long-tail job titles, based on industry-specific information into a structured representation. Further, the knowledge graph may embed vast amounts of data that cannot be manually processed.

Additionally, the knowledge graph may be readily traversed to identify new relationships, for example, new job title to job title relationships and job title to content relationships. In some embodiments, the knowledge graph may be traversed to extract new relationships based on different similarity measurements. By exploiting different similarity measurements, not only may new relationships be identified, but high accuracy may be achieved. For example, through aspects described herein, jobs with similar responsibilities but in different industries, remain distinct, while jobs in similar industries and similar responsibilities are associated, even when these differences and similarities are not readily identifiable for a manual reviewer.

Beneficially, these new relationships may be identified and stored to be used for similar job titles and resume summaries. For example, resume summaries may be "tagged" "linked" or otherwise associated with one or more job titles.

Resume summary and job title relationships may have many beneficial uses, for example, when drafting resumes, cover letters, resume work histories, and other related documents. In some embodiments, a resume summary may be suggested based on being tagged with a job title. For example, when building a resume or describing a particular job experience, a resume summary may be suggested based on the job title for the job experience because the resume summary is tagged with the job title. As another example, when building a resume work history, a resume summary may be suggested based on the desired job title for the role because the resume summary is tagged with the job title. In some embodiments, a job title may be suggested based on being tagged with a resume summary. For example, a job title may be suggested based on a summary of the job because the resume summary is tagged with the job title.

*Example Dynamic Tagging System*

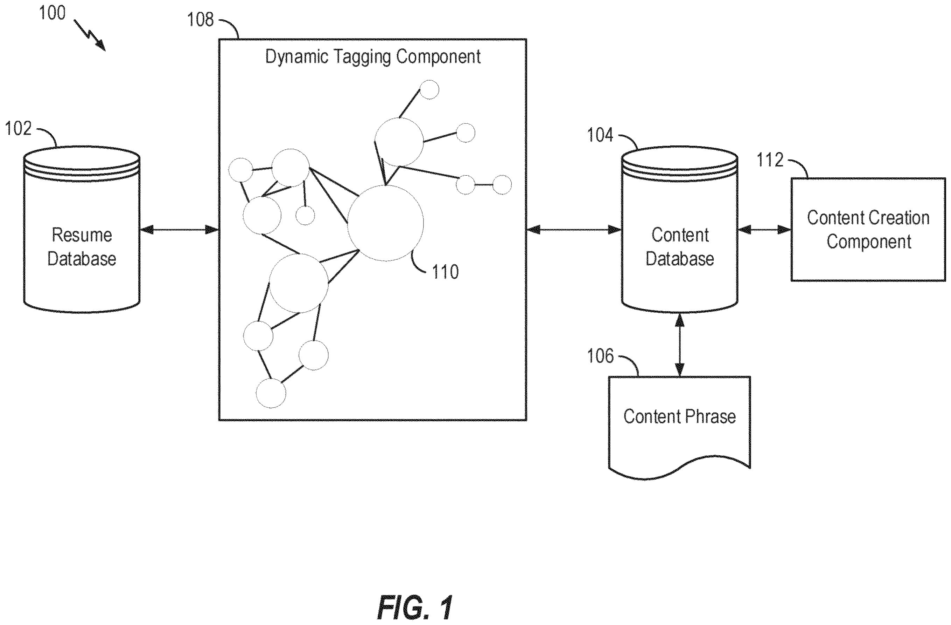

**FIG. 1** depicts an example dynamic tagging system 100 in which aspects of the present disclosure may be performed. For example, dynamic tagging system 100 may be configured to identify and exploit relationships through knowledge graph 110 to "tag" or "link" a content phrase 106 with one or more job titles. As described herein, a content phrase may be tagged with multiple job titles, including both head job titles and long-tail job titles, beneficially, capturing different content phrase and job title relationships.

Dynamic tagging system 100 includes resume database 102 configured to store resume data. Resume data may include, for example, data regarding job titles, resume summaries, job responsibilities, job tasks, job experience, work history, education, achievements, skills, and the like.

Dynamic tagging system 100 further includes content database 104, which is configured to store content data including one or more content phrases, such as content phrase 106. Content phrase 106 may be a resume summary, or a portion of a summary, of a job experience. For example, content phrase 106 may include "Promoted exceptional customer service by providing departmental direction and daily supervisory oversight to team members." A content phrase may include job duties, responsibilities, tasks, skills, and the like. Content database 104 may store one or more job titles associated with a particular content phrase. Such associated and/or stored job titles may be considered "linked" or "tagged" to the content phrase.

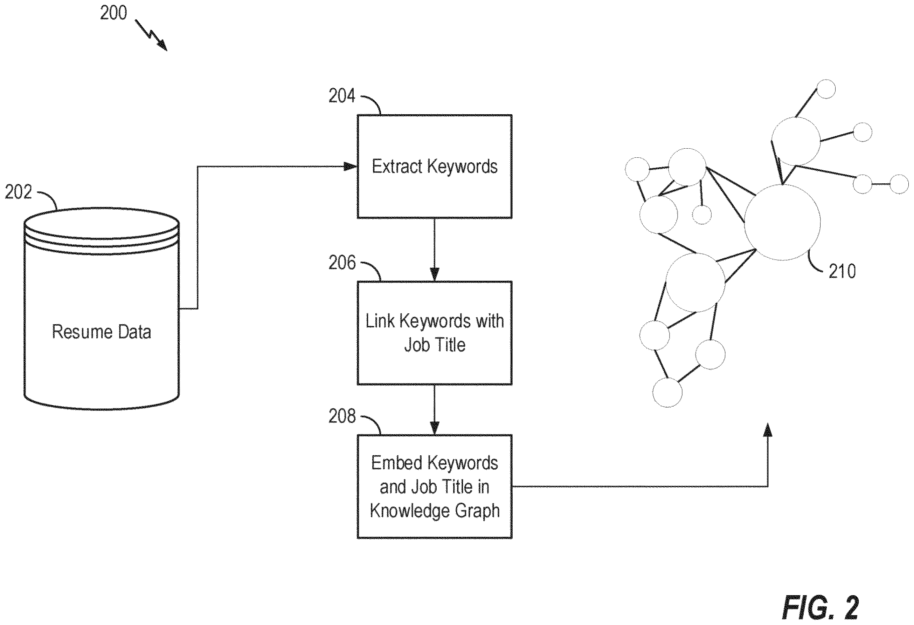

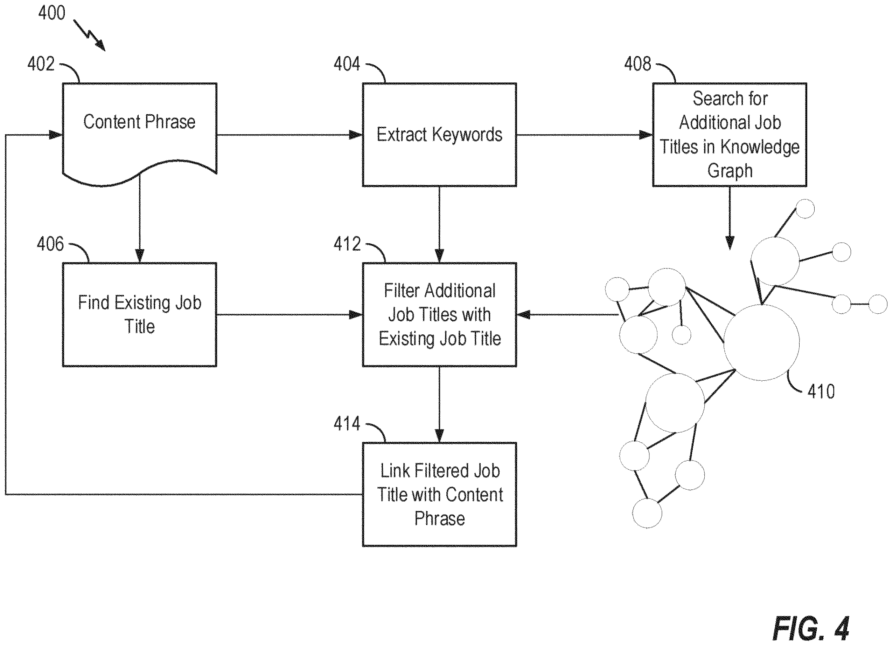

Dynamic tagging system 100 further includes dynamic tagging component 108, which is configured to generate and maintain knowledge graph 110, as described in further detail with respect to **FIG. 2.** Dynamic tagging component 108 is further configured to generate new relationships, for example, by traversing and extracting new relations from knowledge graph 110, as described in further detail with respect to **FIG. 4.** Additionally, dynamic tagging component 108 is further configured to link new relations with a content phrase and store such data in content database 104.

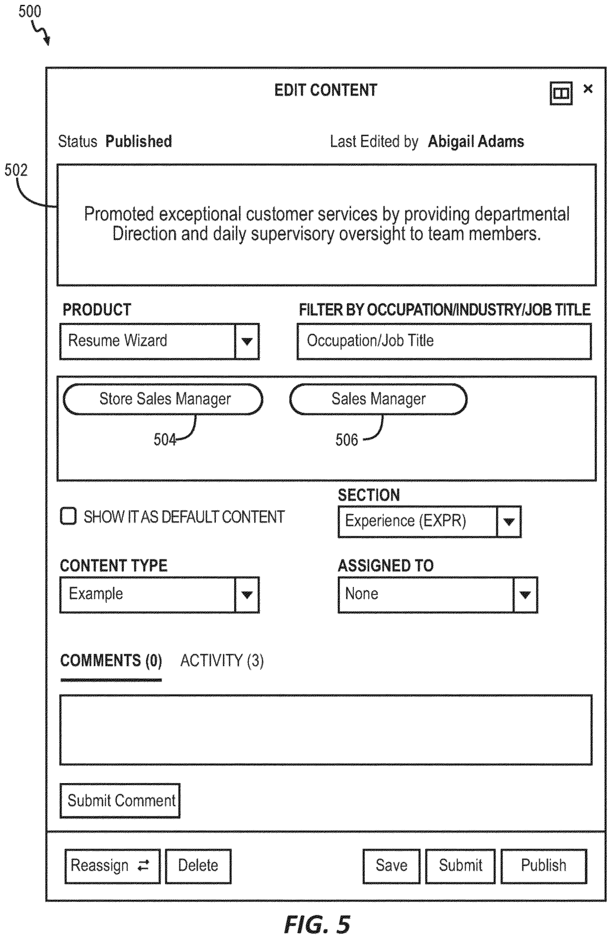

In some embodiments, dynamic tagging system 100 further includes content creation component 112, which is configured to generate and utilize content data stored in content database 104. Content creation component 112 may be configured to present content phrase 106 and one or more linked job titles to a user, such as depicted on user interface 500 in **FIG. 5.** Content creation component 112 may be further configured to process and store content phrases in content database 104. For example, a user may utilize a user interface associated with content creation component 112 to create content phrases. As another example, content creation component 112 may include a language model configured to create content phrases.

In some embodiments, dynamic tagging system 100 further includes one or more additional components configured to utilize content stored in content database 104. For example, when drafting resumes, cover letters, resume work histories, and other related documents. In some embodiments, a content phrase 106 may be suggested based on being stored in content database 104 with a job title. In some embodiments, a job title may be suggested based on content phrase 106.

*Example Flow for Generating a Content-Job Title Knowledge Graph*

**FIG. 2** depicts an example process flow 200 for generating a content-job title knowledge graph, such as knowledge graph 110 in **FIG. 1.** Aspects of process flow 200 may be performed by a dynamic tagging system, such as dynamic tagging system 100 in **FIG. 1.**

At step 204, one or more keywords are extracted from resume data 202. In some embodiments, resume data 202 may be resume data stored in resume database 102 in **FIG. 1.** In some embodiments, the one or more keywords are extracted from resume data with a SGRank keyword extraction framework. SGRank utilizes both statistical and graphical ranking to search through candidate keywords by elimination, utilization of ranking of candidate keywords based on a measurement of importance of a keyword within a document, re-ranking candidate keywords based on position, term length, and subsumption count, and finally graphical-based ranking to extract keywords.

At step 206, the one or more keywords extracted from the resume data are associated with a job title from the resume data 202. For example, where keywords are extracted from a resume summary, the keywords may be associated with the job title from the resume summary.

At step 208, the associated one or more keywords and job title are embedded into a knowledge graph 210. In some embodiments, each of the one or more keywords and job title may be embedded in the knowledge graph 210 as a node and the association between each of the keywords and job title may be embedded in the knowledge graph as an edge connecting between nodes. In some embodiments, the associated one or more keywords and job title are embedded into knowledge graph 210 with a node2vec framework. A node2vec framework is used to generate a knowledge graph by mapping nodes into a low-dimensional space of features to preserve network neighborhoods of nodes. Specifically, node2vec captures intricate relationships between keywords and job title graphs by transforming these relationships into dense vector representations. Nodes representing keywords and job titles are embedded into network neighborhoods through biased random walks to explore neighborhoods of a given node in a computationally efficient manner. The knowledge graph, beneficially, captures the relationships of nodes through network neighborhoods, allowing for exploration and creation of new relationships, such as described with respect to **FIG. 4.** This approach further beneficially readily captures domain-specific knowledge in the knowledge graph. Further, when combined with extraction using SGRank, using node2vec to capture relationships between keywords, job titles, and domain-specific job titles to job titles, the resulting knowledge graph is improved when built on short text such as keywords and job titles.

In some embodiments, additional information associated with a job title may be embedded in the knowledge graph 210. Such additional information may include, for example, information about the occupation associated with the job title, the industry associated with the job title, education associated with the job title, and the like. An industry, for example, may be identified by its associated North American Industry Classification System (NAICS) Code, or similar.

In some embodiments, this additional information may be embedded into the knowledge graph as nodes, for example, a node may be an industry, and another node may be an occupation. This additional information contextualizes and enriches the network neighborhoods, as random walks embed these additional nodes. As described with respect to **FIG. 4,** this additional information beneficially increases the accuracy of new relationships by refining the learned network neighborhoods.

Further, the association between a job title and additional information may be embedded in the knowledge graph 210 as edges. For example, an edge may connect the occupation node with the associated job title node. Another edge may connect the industry node with the associated job title node.

Beneficially, knowledge graph 210 represents a complex network of jobs, including job titles, resume summaries, job responsibilities, tasks, job experience, work history, education, achievements, skills, and the like. Knowledge graph 210 provides an efficient representation of this complex network and may be efficiently traversed to learn new network connections. For example, the complex relationships between head job titles and long-tail job titles may be understood through traversal of knowledge graph 210, such as described in **FIG. 4.**

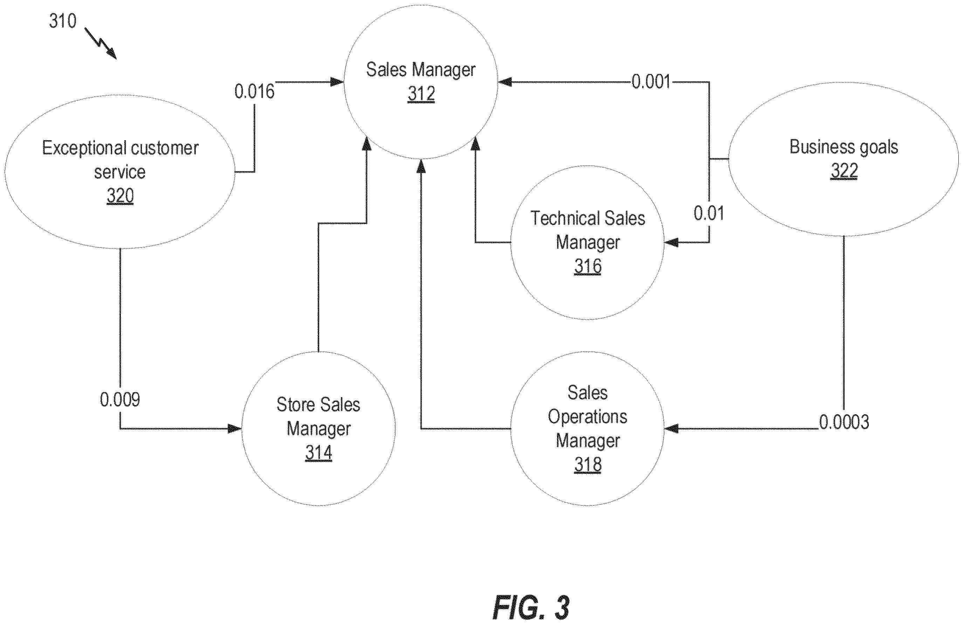

**FIG. 3** depicts an example knowledge graph 310, generated, for example, through process flow 200. Knowledge graph 310 includes a head job title "Sales Manager" 312 and three additional tail job titles, "Store Sales Manager" 314, "Sales Operations Manager" 318, and "Technical Sales Manager" 316. Knowledge graph 310 further includes two keywords, "Exceptional customer service" 320, and "Business goals" 322.

The weight of each keyword to job title relationship may be determined based on a keyword frequency and a job title frequency in the resume data, such as resume data 202. A job title frequency may be based on, for a given number of resumes, the number of resumes containing the job title in the resume data. For example, for one hundred resumes in the resume data 202, the job title "Sales Manager" 312 may appear ten times. A keyword frequency may be based on, for a given number of resumes, the number of times the keyword appears in the resume summaries. For example, for one hundred resumes in resume data 202, the keyword "Exceptional customer service" may appear twelve times. A job title to keyword frequency may be based on the number of times a keyword appears in a resume summary of the given job title. For example, for the job title "Sales Manager," the keyword "Exceptional customer service" may appear twice in a given resume. The weight of the relationship may be based on the job title to keyword frequency over the square root of the title frequency multiplied by the keyword frequency.

Note that **FIG. 2** is just one example of a process flow, and other process flows including fewer, additional, or alternative steps are possible consistent with this disclosure.

*Example Flow for Generating New Content Relationships*

**FIG. 4** depicts an example processing flow 400 for generating new content relationships for job titles. Aspects of flow 400 may be performed by a dynamic tagging system, such as dynamic tagging system 100 in **FIG. 1.**

Initially, at step 404, one or more keywords are extracted from a content phrase 402. Content phrase 402 may be a content phrase 106 stored in content database 104 in **FIG. 1.** In some embodiments, the one or more keywords are extracted from a content phrase with SGRank, which beneficially ensures the keywords extracted are the important and differentiating keywords of a particular content phrase. For example, content phrase 402 may be "Promoted exceptional customer service by providing departmental direction and daily supervisory oversight to team members." The keywords extracted from the content phrase may include: "exceptional customer service;" "departmental direction;" and "daily supervisory insight."

At step 406, one or more existing job titles associated with the content phrase 402 are identified. In some cases, an existing job title may be a head job title. In other cases, an existing job title may be a long-tail job title. For example, for the content phrase "Promoted exceptional customer service by providing departmental direction and daily supervisory oversight to team members," the associated job title may be "Store Sales Manager." In some embodiments, an existing job title may be associated with the content phrase 402 when it is linked in the content database 104 in **FIG. 1.** In some embodiments, an existing job title may be associated with the content phrase 402 when a node containing the existing job title is connected by an edge in knowledge graph 410 to a node containing the extracted keywords.

At step 408, one or more additional job titles are identified by searching through a knowledge graph 410 based on the extracted one or more keywords from step 404. A dynamic tagging component, such as dynamic tagging component 108 in **FIG. 1,** may traverse knowledge graph 410 using the extracted one or more keywords to identify one or more additional titles. For example, the one or more additional job titles are the nodes representing job titles that may be reached starting at the extracted one or more keywords. As an example, for the extracted keywords "exceptional customer service;" "departmental direction" and "daily supervisory insight," the additional job titles identified in the knowledge graph may be "Customer Care Representative" and "Sales Manager."

In some embodiments, an additional job title may be identified based on the additional job title-to-keyword frequency in the knowledge graph 410. For example, where the frequency of the additional job title to keyword is above a threshold, the additional job title may be identified.

In some embodiments, a job title to keyword frequency may be based on job title to keyword frequency in resume data, e.g., resume data 202 in **FIG. 2,** embedded in the knowledge graph 410. As described, a job title frequency may be based on a number of resumes containing a given job title in the resume data. A job title to keyword frequency may be based on a number of keywords in a resume summary associated with the given job title. For example, a resume summary for the job title "Sales Manager" contains the keyword "customer service" twice. The job title to keyword frequency is two.

In some embodiments, an additional job title may be identified based on a distance between an embedded job title and an embedded keyword in the knowledge graph 410. For example, where the distance between an embedded job title and an embedded keyword in the knowledge graph is below a threshold, the embedded job title may be identified as an additional job title.

At step 412, the one or more additional job titles identified at step 408 are filtered based on the existing job title associated with the content phrase 402. Filtering the one or more additional job titles based on the existing job title may include determining an association between an additional job title and the existing job title.

In some embodiments, an association between the one or more additional titles and the existing job title associated with the content phrase 402 may be determined where the existing job title and the additional job title are associated with the same industry. Industry association may be determined based on an edge embedding the association in knowledge graph 410. For example, the existing job title and the additional job title are associated with the same industry where a node representing the existing job title is connected by an edge to a node representing an industry, and the node representing the industry is also connected to a node representing the additional job title.

In some embodiments, an association between the one or more additional titles and the existing job tile associated with the content phrase may be determined where the existing job title and the additional job title are similar based on the knowledge graph 410. The association may be based on the similarity between the existing job title and the additional job title is above a threshold. The similarity metric may be based on a cosine similarity which measures the similarity between two vectors of an inner product space. For example, the cosine similarity may be defined as:

$$\cos_{sim} = np.dot\left(\frac{vector_1, vector_2}{(norm(vector_1) \times norm(vector_2))}\right).$$

For example, an association may be determined between the existing job title "Store Sales Manager" and the additional job title "Sales Manager" through comparing industries and/or determining graph similarity. The existing job title "Store Sales Manager" and the additional job title "Sales Manager" are determined to be in the same industry because a node representing "Store Sales Manager" and a node representing "Sales Manager" each have an edge connecting to a node representing a retail industry. Further, the existing job title "Store Sales Manager" and the additional job title "Sales Manager" are determined to have high knowledge graph similarity, e.g., above a threshold similarity. Thus, because the existing job title "Store Sales Manager" and the additional job title "Sales Manager" are in the same industry and/or have high graph similarity, "Sales Manager" and "Store Sales Manager" are determined to be associated.

As another example, the additional job title "Customer Care Representative" may be compared to the existing job title "Store Sales Manager" to determine an association. The existing job title "Store Sales Manager" and the additional job title "Customer Care Representative" are determined to not be in the same industry because a node representing "Store Sales Manager" and a node representing "Customer Care Representative" do not each have an edge connecting to the same node representing an industry. Further, the existing job title "Store Sales Manager" and the additional job title "Customer Care Representative" are determined to have low knowledge graph similarity, e.g., below a threshold similarity. Thus, because the existing job title "Store Sales Manager" and the additional job title "Customer Care Representative" are not in the same industry and/or have low graph similarity, "Sales Manager" and "Customer Care Representative" are determined to not be associated.

Beneficially, filtering the additional job titles at step 412 ensures high accuracy of new relationships. Step 412 may comprise different similarity measurements to determine whether to associate two job titles. These different similarity measurements may further filter, or remove, job titles not closely related or related in a manner for which association with content phrase 402 is valuable. Further, such measurements provide standardization for relations to ensure precision in new associations.

At step 414, the one or more additional job titles filtered at step 412 are associated with the content phrase 402. In response to determining an additional job title from the one or more additional job titles is associated with the existing job title for content phrase 402 at step 412, the additional job title may be linked or tagged to the content phrase 402. The linked additional job title may be stored with the content phrase 402 in a content database, such as content database 104 in **FIG. 1,** to be used with the entire content phrase 402. For example, where "Sales Manager" and "Store Sales Manager" are determined to be associated at step 412, "Sales Manager" may be associated with the entire content phrase 402.

Content database may be used for further downstream processes, for example a content creation component 112 in **FIG. 1.** For example, when drafting resumes, cover letters, resume work history, and other related documents, content phrases and tagged job titles may be utilized. When building a resume, for example, a job title may be selected for a work experience and a content phrase linked to the job title may be supplied as part of the resume summary. Further, when building a resume work history, a resume summary may be suggested based on the desired job title for the role because the resume summary is tagged with the job title.

Flow 400 provides many technical benefits including a standardized and structured approach for generating accurate and precise relationships. By employing both a knowledge graph and filtering steps, flow 400 balances capturing and understanding new relationships with measurable particulars.

Note that **FIG. 4** is just one example of a process flow, and other process flows including fewer, additional, or alternative steps are possible consistent with this disclosure.

*Example Content Creation User Interface*

**FIG. 5** depicts an example user interface 500 for a content creation component, such as content creation component 112 in **FIG. 1.**

User interface 500 depicts an example content phrase 502, for example, content phrase 106 in **FIG. 1,** or content phrase 402 in **FIG. 4.** Content phrase 502 is associated or linked with job title 504 "Store Sales Manager" and job title 506 "Sales Manager." For example, as described at step 406 in **FIG. 4,** job title 504 may be an existing job title associated with content phrase 502.

Job title 506 may be an additional job title linked to content phrase 502. For example, job title 506 may be identified by searching through a knowledge graph, such as described at step 408 in **FIG. 4.** Job title 506 may thus be determined to be associated with existing job title 504, such as described at step 412 in **FIG. 4,** and then linked with content phrase 502 at step 414.

In some embodiments, as new content phrases are generated, for example, by a user of user interface 500, one or more additional job titles may be linked. For example, a new content phrase may be generated for a long-tail job title, and it may also be linked to a head job title, such as through flow 400 or method 600, described herein. Thus, beneficially, a content phrase does not need to be generated directly for every job title, such as every possible long-tail job title.

*Example Method for Identifying and Linking Job Titles*

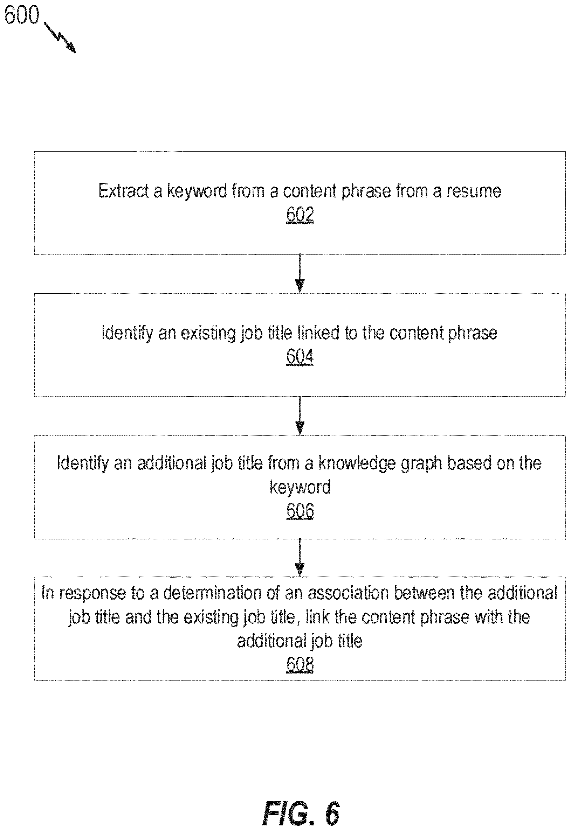

**FIG. 6** depicts an example method 600 for generating new content relationships for job titles. Aspects of method 600 may be performed by a dynamic tagging system, such as dynamic tagging system 100 in **FIG. 1.**

Initially, method 600 begins at step 602 with extracting a keyword from a content phrase from a resume. For example, a content phrase may be a resume summary for a resume, such as content phrase 106 stored in content database 104 in **FIG. 1.**

Method 600 proceeds to step 604 with identifying an existing job title linked to the content phrase. In some embodiments, an existing job title may be associated with the content phrase when it is linked in the content database 104 in **FIG. 1.** In some embodiments, an existing job title may be associated with the content phrase when a node containing the existing job title is connected by an edge in a knowledge graph, such as knowledge graph 110 in **FIG. 1,** to a node containing the extracted keywords.

Method 600 then proceeds to step 606 with identifying an additional job title from the knowledge graph based on the keyword. A knowledge graph may be traversed to identify one or more additional titles.

In some embodiments, identifying the additional job title from the knowledge graph, based on the keyword comprises searching for the additional job title based on a frequency of the additional job title to the keyword in the knowledge graph.

In some embodiments, identifying the additional job title from the knowledge graph, based on the keyword comprises searching for the additional job title based on a distance between an embedding of the additional job title and an embedding of the keyword in the knowledge graph.

In response to determining an association between the additional job title and the existing job title, method 600 proceeds to step 608 with linking the content phrase with the additional job title. In some embodiments, the link between the content phrase and additional job title may be stored in a content database, for example, content database 104 in **FIG. 1.** In some embodiments the link between the content phrase and additional job title may be stored in the knowledge graph. Beneficially, an additional job title is linked when an association is determined, for example, based on different similarity measurements. These different similarity measurements may filter or remove distinct job titles from the similar job titles, in a standardized manner to ensure accurate and precise associations.

In some embodiments, determining the association between the additional job title and the existing job title, comprises determining an industry associated with the existing job title and the industry associated with the additional job title are the same. In some embodiments, industry association may be determined based on an edge embedding the association in a knowledge graph. For example, the existing job title and the additional job title are associated with the same industry where a node embedding the existing job title is connected by an edge to a node embedding an industry, and the node embedding the industry is also connected to a node embedding the additional job title.

In some embodiments, determining the association between the additional job title and the existing job title, comprises determining a similarity between the existing job title and the additional job title based on the knowledge graph is above a threshold.

In some embodiments, method 600 further comprises: generating the knowledge graph, comprising: extracting one or more keywords from resume data; linking the extracted one or more keywords with a resume job title in the resume data; and embedding each of the extracted one or more keywords as a node in the knowledge graph; embedding the resume job title in the knowledge graph, such as described with respect to **FIG. 2.**

As described herein method 600 provides a standardized and structured approach to ensure associations are accurate and precise. This is achieved, at least in part, through exploration of the knowledge graph's graphical representation of the search space and rules-based similarity measurements.

Note that **FIG. 6** is just one example of a method, and other methods including fewer, additional, or alternative steps are possible consistent with this disclosure.

*Example Method for Generating a Knowledge Graph*

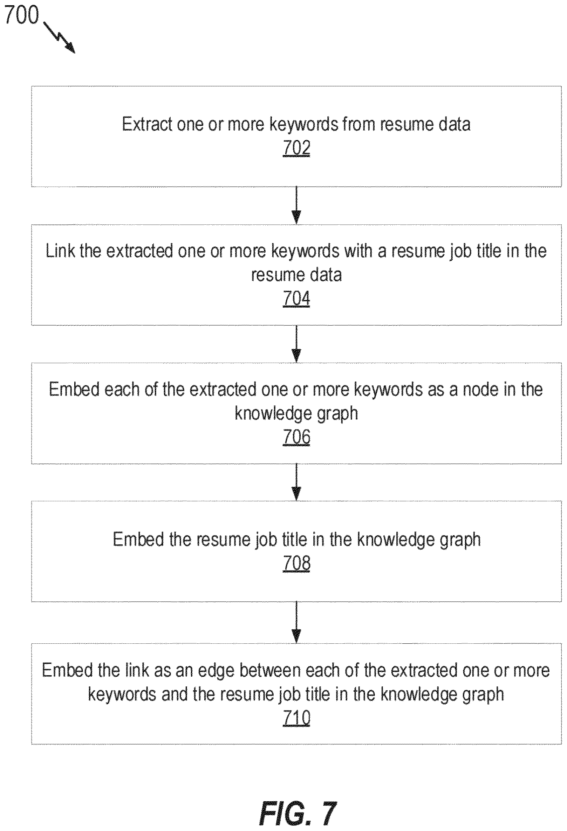

**FIG. 7** depicts an example method 700 for generating a content-job title knowledge graph generating the knowledge graph, such as knowledge graph 110 in **FIG. 1.**

Method 700 begins at step 702 with extracting one or more keywords from resume data, such as stored in resume database 102 in **FIG. 1.** In some embodiments, the one or more keywords are extracted from resume data with SGRank. SGRank utilizes both statistical and graphical ranking to extract keywords.

Method 700 proceeds to step 704 with linking the extracted one or more keywords with a resume job title in the resume data. For example, where keywords are extracted from a resume summary in the resume data, the keywords may be associated with the job title from the resume summary. In some embodiments, linking the extracted one or more keywords with the resume job title comprises storing the one or more keywords with the resume job title in a content database.

Method 700 then proceeds to step 706 with embedding each of the extracted one or more keywords as a node in the knowledge graph, such as knowledge graph 110 in **FIG. 1.** In some embodiments, the extracted one or more keywords are embedded into the knowledge graph with a node2vec framework. A node2vec framework is used to generate a knowledge graph by mapping nodes into a low-dimensional space of features to preserve network neighborhoods of nodes. Nodes representing keywords and job titles are embedded into network neighborhoods through biased random walks to explore neighborhoods of a given node in a computationally efficient manner.

Method 700 then proceeds to step 708 with embedding the resume job title in the knowledge graph. In some embodiments, the resume job title may be embedded in the knowledge graph as a node. In some embodiments, the resume job title is embedded into the knowledge graph with node2vec.

Method 700 then proceeds to step 710 with embedding the link as an edge between each of the extracted one or more keywords and the resume job title in the knowledge graph. In some embodiments, the links are embedded into the knowledge graph with node2vec.

In some embodiments, additional information associated with a job title may be embedded in the knowledge graph. Such additional information may include information about the occupation associated with the job title, the industry associated with the job title, education associated with the job title and the like. In some embodiments, this additional information may be embedded into the knowledge graph as nodes, for example, a node may be an industry, and another node may be an occupation.

Beneficially, the complex and non-deterministic relationships between job titles and job responsibilities, as well as other information, may be represented in a structured manner through the knowledge graph representation. The knowledge graph contextualizes job titles, both generalized head job titles, and niche long-tail job titles, based on industry-specific information. Further, the knowledge graph may embed vast amounts of data that cannot be manually processed. Additionally, the knowledge graph may beneficially traversed, to explore these relationships, such as described with respect to method 600.

Note that **FIG. 7** is just one example of a method, and other methods including fewer, additional, or alternative steps are possible consistent with this disclosure.

*Example Computing Device*

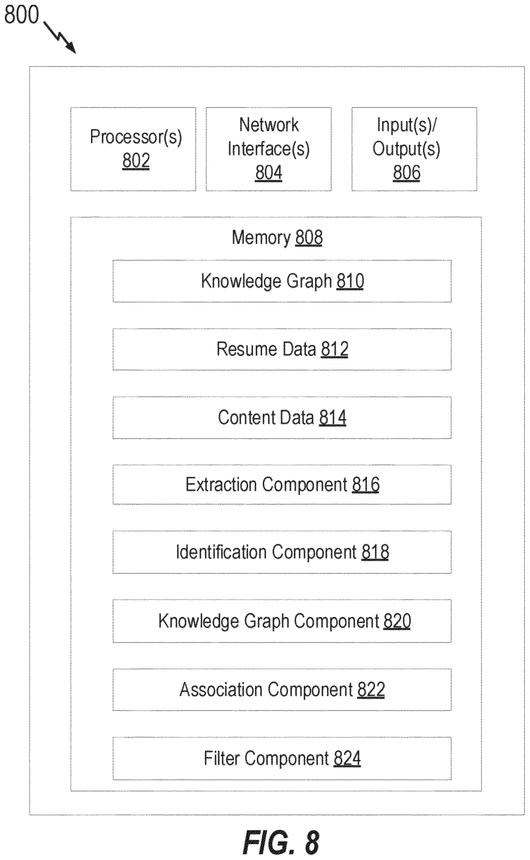

**FIG. 8** depicts an example computing device 800, which may be configured to perform methods according to one or more embodiments shown and described herein. As illustrated, the computing device 800 includes one or more processors 802, one or more network interfaces 804, inputs/outputs 806, and memory 808.

Generally, processor(s) 802 are configured to execute computer-executable instructions (e.g., software code) to perform various functions, as described herein.

The network interface(s) 804 generally provides data access to any sort of data network, including personal area networks (PANs), local area networks (LANs), wide area networks (WANs), the Internet, and the like.

The input(s) and output(s) 806 generally provide means for providing data to and from the online document creation system parallel interaction user interface system, such as via connection to computing device peripherals, including user interface peripherals.

The memory 808 is configured to store various types of components and data.

In this example, memory 808 includes an extraction component 816, identification component 818, knowledge graph component 820, association component 822, filter component 824, knowledge graph 810, resume data 812, and content data 814.

Extraction component 816 is configured to extract keywords from content phrases, for example, stored in content data 814. Extracting component is further configured to extract keywords from resume data 812.

Identification component 818 is configured to identify existing job titles linked to a content phrase, for example, stored in content data 814.

Knowledge graph component 820 is configured to generate, update, and traverse knowledge graph 810. Knowledge graph component 820 is configured to embed as nodes and edges data and relationships. For example, knowledge graph component 820 may embed extracted keywords as a node in the knowledge graph, embed the resume job title in the knowledge graph; and embed the link as an edge between each of the extracted one or more keywords and the resume job title in the knowledge graph. Further, knowledge graph component 820 may be configured to identifying an additional job title from the knowledge graph based on the keyword through traversal of the knowledge graph.

Association component 822 is configured to link content phrases with additional job titles. In some embodiments, the link between the content phrase and additional job title may be stored in a content database, for example, content database 104 in **FIG. 1.** In some embodiments the link between the content phrase and additional job title may be stored in the knowledge graph 810. Association component is further configured to linking the extracted one or more keywords with a resume job title in the resume data 812.

Filter component 824 is configured to determine an association between additional job titles and existing job titles. In some embodiments, filter component is configured to determine industry associations between additional job titles and existing job titles. In some embodiments, filter component is configured to determine graph similarities between existing job titles and additional job titles are above a threshold.

*Example Clauses*

Implementation examples are described in the following numbered clauses:

Clause 1: A method, comprising: extracting a keyword from a content phrase from a resume; identifying an existing job title linked to the content phrase; identifying an additional job title from a knowledge graph based on the keyword; and in response to determining an association between the additional job title and the existing job title, linking the content phrase with the additional job title.

Clause 2: The method of Clause 1, wherein identifying the additional job title from the knowledge graph based on the keyword comprises searching for the additional job title based on a frequency of the additional job title to the keyword in the knowledge graph.

Clause 3: The method of any one of Clauses 1-2, wherein identifying the additional job title from the knowledge graph based on the keyword comprises searching for the additional job title based on a distance between an embedding of the additional job title and an embedding of the keyword in the knowledge graph.

Clause 4: The method of any one of Clauses 1-3, wherein determining the association between the additional job title and the existing job title, comprises: determining an industry associated with the existing job title and the industry associated with the additional job title are the same.

Clause 5: The method of any one of Clauses 1-4, wherein determining the association between the additional job title and the existing job title, comprises: determining a similarity between the existing job title and the additional job title based on the knowledge graph is above a threshold.

Clause 6: The method of any one of Clauses 1-5, further comprising generating the knowledge graph, comprising: extracting one or more keywords from resume data; linking the extracted one or more keywords with a resume job title in the resume data; embedding each of the extracted one or more keywords as a node in the knowledge graph; and embedding the resume job title in the knowledge graph.

Clause 7: The method any one of Clauses 1-6, wherein the content phrase from the resume comprises a resume summary.

Clause 8: A processing system, comprising: a memory comprising computer-executable instructions; and a processor configured to execute the computer-executable instructions and cause the processing system to perform a method in accordance with any one of Clauses 1-7.

Clause 9: A processing system, comprising means for performing a method in accordance with any one of Clauses 1-7.

Clause 10: A non-transitory computer-readable medium storing program code for causing a processing system to perform the steps of any one of Clauses 1-7.

Clause 11: A computer program product embodied on a computer-readable storage medium comprising code for performing a method in accordance with any one of Clauses 1-7.

*Additional Considerations*

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c). Reference to an element in the singular is not intended to mean only one unless specifically so stated, but rather "one or more." For example, reference to an element (e.g., "a processor," "a memory," etc.), unless otherwise specifically stated, should be understood to refer to one or more elements (e.g., "one or more processors," "one or more memories," etc.). The terms "set" and "group" are intended to include one or more elements, and may be used interchangeably with "one or more." Where reference is made to one or more elements performing functions (e.g., steps of a method), one element may perform all functions, or more than one element may collectively perform the functions. When more than one element collectively performs the functions, each function need not be performed by each of those elements (e.g., different functions may be performed by different elements) and/or each function need not be performed in whole by only one element (e.g., different elements may perform different sub-functions of a function). Similarly, where reference is made to one or more elements configured to cause another element (e.g., an apparatus) to perform functions, one element may be configured to cause the other element to perform all functions, or more than one element may collectively be configured to cause the other element to perform the functions. Unless specifically stated otherwise, the term "some" refers to one or more.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A computer-implemented method, comprising:

   extracting a keyword from a content phrase from a resume;
   identifying an existing job title linked to the content phrase;
   identifying an additional job title from a knowledge graph based on the keyword; and
   in response to determining an association between the additional job title and the existing job title, linking the content phrase with the additional job title.

2. The computer-implemented method of claim 1, wherein identifying the additional job title from the knowledge graph based on the keyword comprises searching for the additional job title based on a frequency of the additional job title to the keyword in the knowledge graph.

3. The computer-implemented method of claim 1 or 2, wherein identifying the additional job title from the knowledge graph based on the keyword comprises searching for the additional job title based on a distance between an embedding of the additional job title and an embedding of the keyword in the knowledge graph.

4. The computer-implemented method of any preceding claim, wherein determining the association between the additional job title and the existing job title, comprises determining an industry associated with the existing job title and the industry associated with the additional job title are the same.

5. The computer-implemented method of any preceding claim, wherein determining the association between the additional job title and the existing job title, comprises:
determining a similarity between the existing job title and the additional job title based on the knowledge graph is above a threshold.

6. The computer-implemented method of any preceding claim, further comprising generating the knowledge graph, comprising:

extracting one or more keywords from resume data;
linking the extracted one or more keywords with a resume job title in the resume data;
embedding each of the extracted one or more keywords as a node in the knowledge graph; and
embedding the resume job title in the knowledge graph.

7. The computer-implemented method of any preceding claim, wherein the content phrase from the resume comprises a resume summary.

8. A processing system, comprising: a memory comprising computer-executable instructions; and a processor configured to execute the computer-executable instructions and cause the processing system to:

extract a keyword from a content phrase from a resume;
identify an existing job title linked to the content phrase;
identify an additional job title from a knowledge graph based on the keyword; and
in response to a determination of an association between the additional job title and the existing job title, link the content phrase with the additional job title.

9. The processing system of claim 8, wherein in order to identify the additional job title from the knowledge graph based on the keyword, the processor is further configured to cause the processing system to search for the additional job title based on a frequency of the additional job title to the keyword in the knowledge graph.

10. The processing system of claim 8 or 9, wherein in order to identify the additional job title from the knowledge graph based on the keyword, the processor is further configured to cause the processing system to search for the additional job title based on a distance between an embedding of the additional job title and an embedding of the keyword in the knowledge graph.

11. The processing system of any of claims 8 to 10, wherein in order to determine the association between the additional job title and the existing job title, the processor is further configured to cause the processing system to determine an industry associated with the existing job title and the industry associated with the additional job title are the same.

12. The processing system of any of claims 8 to 11, wherein in order to determine the association between the additional job title and the existing job title, the processor is further configured to cause the processing system to determine a similarity between the existing job title and the additional job title based on the knowledge graph is above a threshold.

13. The processing system of any of claims 8 to 12, wherein the content phrase from the resume comprises a resume summary.

14. The processing system of any of claims 8 to 13, wherein the processor is further configured to cause the processing system to generate the knowledge graph, comprising:

extract one or more keywords from resume data;
link the extracted one or more keywords with a resume job title in the resume data;
embed each of the extracted one or more keywords as a node in the knowledge graph; and
embed the resume job title in the knowledge graph.

15. A computer-readable medium storing program code for causing a processing system to perform the steps of:

extracting a keyword from a content phrase from a resume;
identifying an existing job title linked to the content phrase;
identifying an additional job title from a knowledge graph based on the keyword; and
in response to determining an association between the additional job title and the existing job title, linking the content phrase with the additional job title.

**FIG. 1**

EP 4 546 236 A1

FIG. 2

*FIG. 3*

FIG. 4

EP 4 546 236 A1

500

## EDIT CONTENT ⊡ ✕

Status **Published**                    Last Edited by **Abigail Adams**

502

Promoted exceptional customer services by providing departmental
Direction and daily supervisory oversight to team members.

**PRODUCT**                             **FILTER BY OCCUPATION/INDUSTRY/JOB TITLE**

| Resume Wizard ▼ |                      | Occupation/Job Title |

( Store Sales Manager )          ( Sales Manager )

504                                   506

☐ SHOW IT AS DEFAULT CONTENT          **SECTION**
                                      | Experience (EXPR) ▼ |

**CONTENT TYPE**                        **ASSIGNED TO**
| Example ▼ |                          | None ▼ |

**COMMENTS (0)**   ACTIVITY (3)

| Submit Comment |

| Reassign ⇄ | | Delete |          | Save | | Submit | | Publish |

*FIG. 5*

600

Extract a keyword from a content phrase from a resume
602

Identify an existing job title linked to the content phrase
604

Identify an additional job title from a knowledge graph based on the keyword
606

In response to a determination of an association between the additional job title and the existing job title, link the content phrase with the additional job title
608

*FIG. 6*

700

| Extract one or more keywords from resume data |
| 702 |

↓

| Link the extracted one or more keywords with a resume job title in the resume data |
| 704 |

↓

| Embed each of the extracted one or more keywords as a node in the knowledge graph |
| 706 |

↓

| Embed the resume job title in the knowledge graph |
| 708 |

↓

| Embed the link as an edge between each of the extracted one or more keywords and the resume job title in the knowledge graph |
| 710 |

## FIG. 7

800

Processor(s)
802

Network
Interface(s)
804

Input(s)/
Output(s)
806

Memory 808

Knowledge Graph 810

Resume Data 812

Content Data 814

Extraction Component 816

Identification Component 818

Knowledge Graph Component 820

Association Component 822

Filter Component 824

*FIG. 8*

Europäisches
Patentamt

European
Patent Office

Office européen
des brevets

# EUROPEAN SEARCH REPORT

**Application Number**

EP 24 19 4722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/343284 A1 (HINTON SEAN [CA] ET AL) 27 October 2022 (2022-10-27) | 1-3, 5-10, 12-15 | INV. G06Q10/1053 G06F16/901 |
| Y | * paragraph [0027] *<br>* paragraph [0038] *<br>* paragraph [0040] *<br>* paragraph [0048] *<br>* paragraph [0054] - paragraph [0063] *<br>* paragraph [0071] - paragraph [0074] * | 4,11 | G06N5/022 |
| Y | US 2005/080656 A1 (CROW DANIEL NICHOLAS [US] ET AL) 14 April 2005 (2005-04-14)<br>* figure 14 *<br>* paragraph [0126] - paragraph [0128] * | 4,11 | |
| A | US 2019/066054 A1 (KENTHAPADI KRISHNARAM [US] ET AL) 28 February 2019 (2019-02-28)<br>* figures 2,3,5 *<br>* paragraph [0084] - paragraph [0090] *<br>* paragraph [0103] - paragraph [0107] *<br>* paragraph [0114] - paragraph [0121] * | 1-15 | |

**TECHNICAL FIELDS SEARCHED (IPC)**

G06Q
G06F
G06N

The present search report has been drawn up for all claims

| Place of search | Date of completion of the search | Examiner |
|---|---|---|
| Munich | 27 January 2025 | Shivaldova, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

# EP 4 546 236 A1

## ANNEX TO THE EUROPEAN SEARCH REPORT
## ON EUROPEAN PATENT APPLICATION NO.

EP 24 19 4722

27-01-2025

| Patent document cited in search report | Publication date | Patent family member(s) | | Publication date |
|---|---|---|---|---|
| US 2022343284 A1 | 27-10-2022 | EP | 4330893 A1 | 06-03-2024 |
| | | JP | 2024518152 A | 25-04-2024 |
| | | US | 11164153 B1 | 02-11-2021 |
| | | US | 2022343284 A1 | 27-10-2022 |
| | | US | 2024135329 A1 | 25-04-2024 |
| | | WO | 2022226646 A1 | 03-11-2022 |
| US 2005080656 A1 | 14-04-2005 | NONE | | |
| US 2019066054 A1 | 28-02-2019 | NONE | | |